# EUROPÄISCHE PATENTSCHRIFT

(11) **EP 1 412 126 B1**
(45) Veröffentlichungstag und Bekanntmachung des Hinweises auf die Patenterteilung: **21.03.2007**
(21) Anmeldenummer: 02732402.9
(22) Anmeldetag: 25.04.2002
(51) Int. Cl.: B23K 26/14, B23K 10/02

(54) **VERFAHREN ZUM LASER-PLASMA-HYBRIDSCHWEISSEN**
LASER-PLASMA HYBRID WELDING METHOD
PROCEDE DE SOUDAGE HYBRIDE LASER-PLASMA

(30) Priorität: 28.07.2001 DE 10136951
(43) Veröffentlichungstag der Anmeldung: 28.04.2004
(73) Patentinhaber: MTU Aero Engines GmbH, 80995 München (DE); DaimlerChrysler AG, 70567 Stuttgart (DE)
(72) Erfinder: BAYER, Erwin, 85221 Dachau (DE); HÖSCHELE, Jörg, 88048 Friedrichshafen (DE); STEINWANDEL, Jürgen, 88690 Uhldingen-Mühlhofen (DE); WILLNEFF, Rainer, 88677 Markdorf (DE)
(86) Internationale Anmeldenummer: PCT/DE2002/001510
(87) Internationale Veröffentlichungsnummer: WO 2003/011516

(56) Entgegenhaltungen:
- EP-A- 0 976 488

## Beschreibung

Die Erfindung betrifft ein Verfahren zum Laser-Plasma-Hybridschweißen nach dem Oberbegriff des Patentanspruchs 1, dessen Gattung der EP-A-976488 zu entnehmen ist.

In US 6,034,343 wird eine Vorrichtung beschrieben, bei der ein Laserschweißverfahren und ein konventionelles Plasmaschweißverfahren, z.B. Wolfram-Inertgas-Schweißen (WIG) oder Metallaktivgas-Schweißen (MAG), miteinander kombiniert werden. Dabei brennt ein Lichtbogen zwischen einer nicht abschmelzenden Elektrode, üblicherweise eine WolframElektrode, und dem Werkstück, wodurch das Werkstück aufgeschmolzen wird. Mittels eines Linsensystems wird der Laserstrahl auf das Werkstück fokusiert. Das Linsensystem und die Elektrode sind dabei konzentrisch zueinander angeordnet. Mit dem Laserstrahl ist es nun möglich, eine hohe Energieleistung in einem schmalen und tiefen Bereich des aufgeschmolzenen Werkstücks zu konzentrieren.

Ein weiteres Verfahren zum Verschweißen von Werkstücken mittels Laser-Plasma-Hybridschweißens ist in DE 195 00 512 A1 beschrieben. Hierbei sind der zum Verschwei-ßen der Werkstücke verwendete Laserstrahl und der Lichtbogen in einem Winkel zueinander angeordnet. Der Lichtbogen brennt auch bei diesem bekannten Verfahren zwischen einer Elektrode und dem Werkstück.

Bei den bekannten Verfahren erweist es sich als nachteilig, dass sich aufgrund einer durch die Lebensdauer der Elektrode begrenzten Stromstärke und damit begrenzten Lichtbogenleistung eine relativ geringe Schweißgeschwindigkeit ergibt. Außerdem fließt aufgrund der relativ hohen Wärmeleitfähigkeit der zu verschweißenden Werkstücke ein erheblicher Anteil der in das Werkstück eingebrachten Wärme in die Umgebung der Schweißnaht ab. Hieraus ergeben sich weitere Nachteile hinsichtlich einer hohen Wärmebelastung des Werkstücks, welche zu einem erheblichen Verzug des Werkstücks führt.

Ein weiterer Nachteil ist die eingeschränkte Verwendung von Prozeßgasen. So werden bei den bekannten Verfahren als Prozeßgas üblicherweise Edelgase eingesetzt. Der Einsatz von z.B. Sauerstoff und anderen hinsichtlich der Elektrodenmaterialien korrosiven Prozeßgasen ist nicht möglich.

Aufgrund der hohen Lichtbogendivergenz des Plasmastrahls und der damit verbundenen geringen, in das Werkstück eingebrachten Leistungsdichte, wird bei den bekannten Laser-Plasma-Hybridschweißverfahren ein leistungsstarker Laser benötigt.

Weitere Nachteile sind die geringe Langzeitstabilität sowie der kostenintensive Aufbau und Betrieb herkömmlicher Laser-Plasma-Hybridsschweißysteme.

Aufgabe der Erfindung ist es, ein Verfahren zum Laser-Plasma-Hybridschweißen anzugeben, bei dem eine Reduktion der Investitions- und Betriebskosten des Laser-Plasma-Hybridschweißprozesses und eine Erhöhung der Schweißgeschwindigkeit möglich ist.

Diese Aufgabe wird durch das Verfahren des Patentanspruchs 1 gelöst. Vorteilhafte Ausführungen der Erfindung sind Gegenstand von Unteransprüchen.

Erfindungsgemäß wird zum Laser-Plasma-Hybidschweißen ein freier mikrowelleninduzierter Plasmastrahl verwendet, der folgendermaßen erzeugt wird: in einer hochfrequenten Mikrowellenquelle werden Mikrowellen erzeugt, welche in einem Hohlleiter geführt werden. Das Prozessgas wird in ein mikrowellentransparentes Rohr, welches eine Gaseintrittsöffnung und eine Gasaustrittsöffnung umfasst, bei einem Druck p ≥ 1 bar derart durch die Gaseintrittsöffnung des Rohres eingeleitet, dass es eine tangentiale Strömungskomponente aufweist. Mittels elektrodenlosen Zündens des Prozessgases wird im mikrowellentransparenten Rohr ein Plasma erzeugt, welches durch eine an der Gasaustrittsöffnung des Rohrs angeordnete metallische Düse in den Arbeitsraum eingeleitet wird, wodurch der Plasmastrahl erzeugt wird. Insbesondere befindet sich das zu verschweißende Werkstück im Arbeitsraum.

Der Laserstrahl wird vorteilhaft in einem Festkörperlaser, insbesondere einem Nd-YAG-Laser, oder in einem Gaslaser, insbesondere einem CO₂-Laser oder Excimer-Laser erzeugt. Es ist aber auch möglich, den Laserstrahl in einem Diodenlaser zu erzeugen.

In einer ersten vorteilhaften Ausführung der Erfindung verläuft der Laserstrahl durch das mikrowellentransparente Rohr und durch die Öffnung der Düse in den Arbeitsraum. Dabei ist es z.B. möglich, dass der Laserstrahl und der Plasmastrahl konzentrisch zueinander verlaufen. Bei einem entsprechend großen Öffnungsdurchmesser der Düse ist es aber auch möglich, dass der Laserstrahl und der Plasmastrahl unter einem vorgebbaren Winkel, der durch die Geometrie der Anordnung begrenzt wird, zueinander verlaufen. Der Vorteil dieser Ausführung ist, dass der Laserstrahl unterstützend bei der Zündung und Aufrechterhaltung des Plasmas wirkt. Außerdem kann dadurch ein kompakter Aufbau eines Laser-Plasma-Hybridschweißprozesses realisiert werden.

In einer zweiten vorteilhaften Ausführung des erfindungsgemäßen Laser-Plasma-Hybridschweißverfahrens verläuft der Laserstrahl außerhalb des mikrowellentransparenten Rohrs. Hierbei ist es möglich, in einer geeigneten Anordnung den Laser zur Erzeugung des Laserstrahls außerhalb der Hohlleiteranordnung zur Erzeugung des Plasmastrahls derart zu positionieren, dass sich der Laserstrahl und der Plasmastrahl auf der Oberfläche oder im oberflächennahen Bereich des zu verschweißenden Werkstücks kreuzen. Darüber hinaus können der Laserstrahl und der Plasmastrahl auch derart zueinander angeordnet sein, dass der eine Strahl dem anderen Strahl beim Schweißprozeß vorausläuft. Dadurch kann die Qualität der Schweißnaht verbessert und die Schweißgeschwindigkeit erhöht werden.

Mittels des erfindungsgemäßen elektrodenlosen Laser-Plasma-Hybridschweißver-fahrens ergeben sich besonders vorteilhafte Plasmaeigenschaften. So wird die spezifische Enthalpie des Plasmas und die damit verbundene Enthalpieflussdichte des Plasmas erhöht. Damit verbunden wird die Plasmatemperatur des Plasmas und des Plasmastrahls erhöht. Daraus ergeben sich gegenüber den Laser-Plasma-Hybridschweißverfahren des Stands der Technik Vorteile hinsichtlich einer gesteigerten Schweißgeschwindigkeit und niedrigeren Schweißnahtkosten. Mit dem erfindungsgemäßen Laser-Plasma-Hybridschweißverfahren wird somit ein elektrodenloses Laser-Plasma-Hybridschweißverfahren angegeben, dass erhebliche betriebswirtschaftliche und anwendungsbezogene Vorteile bei gleichzeitig großer Einsatzbreite des Schweißverfahrens bietet.

Außerdem werden die Eigenschaften des Plasmastrahls hinsichtlich eines verringerten Durchmessers sowie einer verringerten Strahlwinkeldivergenz verbessert. Darüber hinaus breitet sich der zylindersymmetrische Plasmastrahl in dem erfindungsgemäßen Verfahren parallel aus.

Die tangentiale Einspeisung des Prozessgases in das mikrowellentransparente Rohr bewirkt, dass sich in dem Rohr eine in Richtung der Gasaustrittsöffnung des Rohrs gerichtet axiale Strömungskomponente ausbildet. Dies wirkt unterstützend bei der erfindungsgemäßen Erzeugung eines Plasmastrahls mit geringer Strahlwinkeldivergenz. Aufgrund der durch die tangentiale Einspeisung des Prozessgases verursachten Radialbeschleunigung, die durch die Querschnittsverengung der Düse in Richtung des Düsenaustritts weiter verstärkt wird, bewegen sich die ungleichförmig beschleunigten freien Ladungsträger in Richtung des Düsenaustritts auf immer engeren Spiralbahnen, wodurch die Zentripetalbeschleunigung der Ladungsträger zunimmt. Diese Bewegung wird von den Ladungsträgern auch nach Austritt aus der Düse in den Arbeitsraum beibehalten. Da aufgrund der unterschiedlichen lonen- und Elektronenbeweglichkeit lokal keine Ladungsneutralität vorliegt, wird im Plasmastrahl ein axial orientiertes Magnetfeld induziert, welches zu einer Strömungseinschnürung des Plasmastrahl nach Austritt aus der Düse führt (z-Pinch). Es handelt sich hierbei um den Magneto-Hydrodynamischen Effekt (MHD-Effekt).

Ein weiterer Vorteil des erfindungsgemäßen Verfahrens ist, dass der Plasmastrahl mittels kostengünstiger und robuster Hochfrequenzsysteme, z.B. Magnetron oder Klystron erzeugt werden kann. Mit diesen Hochfrequenzsystemen sind vorteilhaft Mikrowellenquellen im erforderlichen Leistungsbereich bis 100 kW und Frequenzbereich von 0,95 GHz bis 35 GHz zugänglich. Insbesondere können Mikrowellen der Frequenz 2,46 GHz verwendet werden, da es sich hierbei um kostengünstige und in der Industrie und Haushaltsanwendungen weit verbreitete Mikrowellenquellen handelt.

Aufgrund der elektrodenlosen Plasmaerzeugung ist bei dem erfindungsgemäßen Verfahren keine Einschränkung hinsichtlich der einsetzbaren Prozessgase vorhanden. Mit dem erfindungsgemäßen Verfahren wird somit das Problem des Standes der Technik gelöst, dass es bei elektrodeninduzierten Plasmen zu Reaktionen der eingesetzten Prozessgase mit den Elektrodenwerkstoffen kommt, z.B. zur Bildung von Wolframoxid oder Wolframnitrid bei Wolframelektroden oder zur Wasserstoffversprödung. Es ist somit möglich, dass durch geeignete Wahl prozesstauglicher Gase oder Gasmischungen die spezifische Enthalpie des Plasmas in Verbindung mit einer verbesserten Wärmeleitung zwischen Plasma und Werkstück zu vergrößern.

Außerdem wird, aufgrund des elektrodenlosen Laser-Plasma-Hybridschweißens der Eintrag von unerwünschtem Elektrodenmaterial in das Schweißgut verhindert. Des weiteren ist ein störungsfreier, mannloser und automatisierter Schweißprozess ohne ständiges Auswechseln von Verschleißteilen möglich.

Ein weiterer Vorteil des erfindungsgemäßen Laser-Plasma-Hybridschweißverfahrens ist, dass die Wärmeeinflusszone des Plasmastrahls auf dem Werkstück wesentlich reduziert wird, was einen geringeren Wärmeeintrag, einen reduzierten Werkstückverzug und eine Verringerung der Werkstoffschädigung zur Folge hat. Außerdem wird mittels des erfindungsgemäßen Laser-Plasma-Hybridschweißverfahrens ein fehlerarmes Schweißen hinsichtlich geringerer Randkerben und geringer Porosität der Schweißnaht ermöglicht.

Um einen sicheren Betrieb, sowie eine sichere Zündung der für das erfindungsgemäße Verfahren benötigten Plasmen zu gewährleisten, wird in einer vorteilhaften Ausführung der Erfindung der für die Führung der Mikrowellen vorhandene Hohlleiter im Querschnitt verengt. Dabei wird der Hohlleiter bevorzugt an der Stelle verengt, an der das mikrowellentransparente Rohr durch den Hohlleiter geführt wird. Der Hohlleiter und das Rohr sind dabei in einer zweckmäßigen Ausführung der Erfindung senkrecht zueinander ausgerichtet. Der Vorteil ist eine Erhöhung der elektrischen Feldstärke am Ort der Querschnittsverengung. Dadurch werden zum einen die Zündeigenschaften des Prozessgases verbessert und zum anderen die Leistungsdichte des Plasmas erhöht.

In einer weiteren vorteilhaften Ausführung der Erfindung ist es auch möglich, dass zur Zündung des Plasmas eine Funkenstrecke eingesetzt wird.

Die Erfindung sowie weitere vorteilhafte Ausführungen der Erfindung werden im Folgenden anhand von Zeichnungen näher erläutert. Es zeigen:
- Fig. 1: eine erste Ausführungsform zur Durchführung des erfindungsgemäßen Verfahrens in Schnittdarstellung, wobei der Laserstrahl durch das mikrowellentransparente Rohr verläuft,
- Fig. 2: eine zweite Ausführungsform zur Durchführung des erfindungsgemäßen Verfahrens in Schnittdarstellung, wobei der Laserstrahl außerhalb des mikrowellentransparenten Rohrs verläuft,

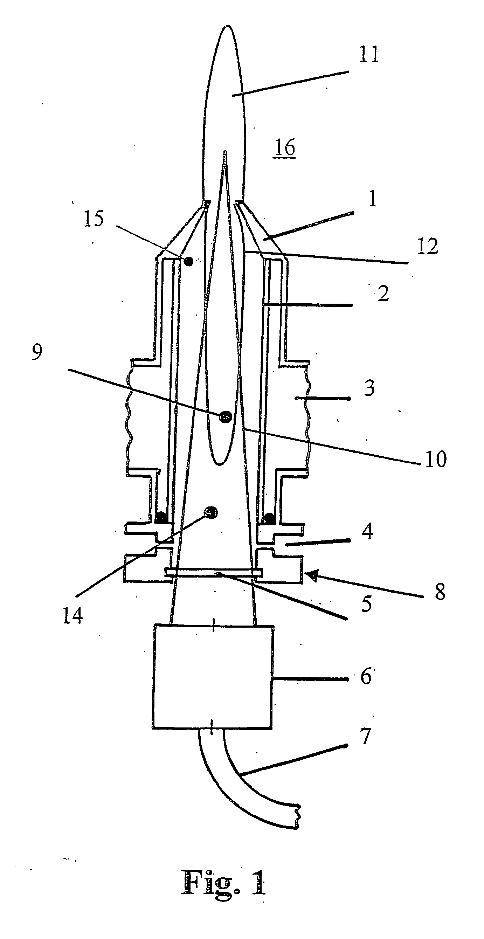

Fig. 1 zeigt in Schnittdarstellung eine erste Ausführungsform zur Durchführung des erfindungsgemäßen Verfahrens. Bei dieser Ausführungsform verläuft der Laserstrahl 10 durch das mikrowellentransparente Rohr 2. Die Darstellung zeigt ein mikrowellentransparentes Rohr 2, welches senkrecht durch einen Hohlleiter 3 geführt ist, der die von einer nicht dargestellten Mikrowellenquelle erzeugten Mikrowellen transportiert. Hierbei können als Hohlleiter 3 handelsübliche Wellenleiter verwendet werden. Es ist aber auch möglich, Hohlleiter zu verwenden, die eine Querschnittsverengung in dem Bereich aufweisen, in dem das mikrowellentransparente Rohr 2 durch den Hohlleiter 3 verläuft.

Das mikrowellentransparente Rohr 2 weist eine Gaseintrittsöffnung 14 für das Prozessgas und eine Gasaustrittsöffnung 15 für das Plasma 12 auf. Im Bereich 9, in dem das mikrowellentransparente Rohr 2 durch den Hohlleiter 3 verläuft wird, das Plasma 12 durch Mikrowellenabsorption erzeugt.

Das mikrowellentransparente Rohr 2 ist an der Gaseintrittsöffnung 14 mit einer Gaszuführungseinheit 8 und an der Gasaustrittsöffnung 15 mit einer metallischen Düse 1, durch die das Plasma 12 als Plasmastrahl 11 in den Arbeitsraum 16 strömt, verbunden. Vorteilhaft kann die metallische Düse 1 auch als Expansionsdüse ausgebildet sein. Hieraus ergeben sich weitere Vorteile hinsichtlich einer geringen Strahldivergenz des Plasmastrahls 11.

In der Gaszuführungseinheit 8 ist ein Gaseinlauf 4 vorhanden, durch den das Prozessgas in das mikrowellentransparente Rohr 2 eingespeist wird. Die Einspeisung erfolgt dabei derart, dass das einströmende Prozessgas eine tangentiale und eine in Richtung der Gasaustrittsöffnung 14 gerichtete axiale Strömungskomponente aufweist. Insbesondere wird das Prozessgas innerhalb des mikrowellentransparenten Rohrs 2 auf spiralförmigen Bahnen geführt (nicht dargestellt). Dadurch kommt es zu einer starken Zentripetalbeschleunigung des Gases in Richtung der Innenoberfläche des mikrowellentransparenten Rohrs 2 und zur.Ausbildung eines Unterdrucks auf der Rohrachse. Dieser Unterdruck erleichtert außerdem auch die Zündung des Plasmas 12.

Der Laserstrahl 10 wird in einer nicht dargestellten Laserquelle erzeugt und mittels eines Lichtleiters 7 einer Optik 6 zugeführt. Die Optik 6 ist dabei vor einem im Boden der Gaszuführungseinheit 8 ausgeführten Fenster 5 angeordnet und koppelt den Laserstrahl 10 in das mikrowellentransparente Rohr 2 ein. Der Laserstrahl 10 verläuft im Rohr 2 parallel zum Plasma 12 und tritt durch die Düse 1 mit dem Plasmastrahl 11 in den Arbeitsraum 16 aus.

Das Plasma 12 kann mittels einer nicht eingezeichneten Funkenstrecke, z.B. eine Bogenentladung oder ein Zündfunke gezündet werden. Bei optimaler Abstimmung des Hohlleitersystems, d.h. maximale Feldstärke der Mikrowelle am Ort der Rohrachse ist auch eine selbstständige Plasmazündung möglich.

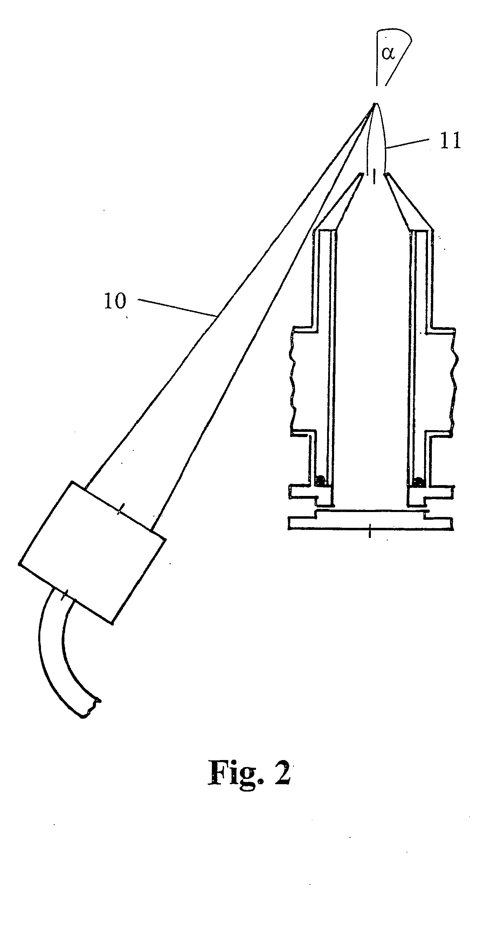

Fig. 2 zeigt in Schnittdarstellung eine zweite Ausführungsform zur Durchführung des erfindungsgemäßen Verfahrens. Bei dieser Ausführungsform verläuft der Laserstrahl 10 außerhalb des mikrowellentransparenten Rohrs 2. Der Laserstrahl 10 und der Plasmastrahl 11 sind dabei unter einem Winkel derart zueinander angeordnet, dass sie in Ausbreitungsrichtung des Plasmastrahls hinter der Düse 1 zusammengeführt werden. Der Plasmastrahl 11 und der Laserstrahl 10 werden wie in Fig. 1 beschrieben erzeugt.

## Patentansprüche

1. Verfahren zum Laser-Plasma-Hybridschweißen, wobei zum Verschweißen von Werkstücken ein Laserstrahl (10) und ein Plasmastrahl (11) im werkstücknahen Prozeßbereich zusammengeführt werden, **dadurch gekennzeichnet, dass** der Plasmastrahl (11) ein freier mikrowelleninduzierter Plasmastrahl ist, welcher mittels folgender Verfahrensschritte erzeugt wird
- Erzeugung von Mikrowellen in einer hochfrequenten Mikrowellenquelle,
- Führen der Mikrowellen in einem Hohlleiter (3),
- Einleiten eines Prozessgases in ein mikrowellentransparentes Rohr (2), welches eine Gaseintrittsöffnung (14) und eine Gasaustrittsöffnung (15) umfasst, bei einem Druck p ≥ 1 bar, wobei das Prozessgas durch die Gaseintrittsöffnung (14) derart in das mikrowellentransparente Rohr (2) eingeleitet wird, dass es eine tangentiale Strömungskomponente aufweist,
- Erzeugung eines Plasmas (12) im mikrowellentransparenten Rohr (2) mittels elektrodenlosem Zünden des Prozessgases,
- Erzeugung eines Plasmastrahls (11) mittels Einleiten des Plasmas (12) in den Arbeitsraum (16) durch eine an der Gasaustrittsöffnung (15) des Rohrs (2) angeordnete metallische Düse (1).

2. Verfahren nach Anspruch 1, **dadurch gekennzeichnet, dass** der Laserstrahl (10) in einem Festkörperlaser, insbesondere einem Nd-YAG-Laser, oder einem Gaslaser, insbesondere einem CO₂-Laser oder einem Excimer-Laser oder einem Diodenlaser, erzeugt wird.

3. Verfahren nach den Ansprüchen 1 und 2, **dadurch gekennzeichnet, dass** der Laserstrahl (10) durch das mikrowellentransparente Rohr (2) und durch die metallische Düse (1) geführt wird.

4. Verfahren nach Anspruch 3, **dadurch gekennzeichnet, dass** die metallische Düse (1) eine Expansionsdüse ist.

5. Verfahren nach den Ansprüchen 1 und 2, **dadurch gekennzeichnet, dass** der Laserstrahl (10) außerhalb des mikrowellentransparenten Rohrs (2) geführt wird.

6. Verfahren nach Anspruch 3 oder 5, **dadurch gekennzeichnet, dass** der Laserstrahl (10) und der Plasmastrahl (11) einen Winkel ( ) zueinander aufweisen.

7. Verfahren nach einem der vorangehenden Ansprüche, **dadurch gekennzeichnet, dass** zur Plasmaerzeugung Mikrowellen im Frequenzbereich zwischen 0,95 GHz und 35 GHz eingesetzt werden.

8. Verfahren nach einem der vorangehenden Ansprüche, **dadurch gekennzeichnet, dass** der senkrecht zum mikrowellentransparenten Rohr (2) ausgerichtete Hohlleiter (3) an der Stelle, an der das Rohr (2) durch den Hohlleiter (3) geführt ist, im Querschnitt verengt ist.

9. Verfahren nach einem der vorangehenden Ansprüche, **dadurch gekennzeichnet, dass** als mikrowellentransparentes Rohr (2) ein Rohr mit dielektrischen Eigenschaften aus SiO₂ oder Al₂O₃ in reiner Form ohne Dotierungen eingesetzt wird.

10. Verfahren nach einem der vorangehenden Ansprüche, **dadurch gekennzeichnet, dass** zur Zündung des Plasmas (12) eine Funkenstrecke eingesetzt wird.

## Claims

1. Method for laser-plasma hybrid welding, wherein for welding workpieces a laser beam (10) and a plasma beam (11) are brought together in the process region close to the work-piece, **characterised in that** the plasma beam (11) is a free microwave-induced plasma beam that is created by means of the following procedural steps:
- generating microwaves in a high-frequency microwave source,
- guiding the microwaves in a waveguide (3),
- introducing a process gas into a microwave-transparent tube (2), which has a gas inlet opening (14) and a gas outlet opening (15), at a pressure p > 1 bar, the process gas being introduced through the gas inlet opening (14) into the microwave-transparent tube (2) so that it has a tangential flow component,
- generating a plasma (12) in the microwave-transparent tube (2) by means of electrodeless ignition of the process gas,
- generating a plasma beam (11) by introducing the plasma (12) into the working space (16) through a metallic nozzle (1) arranged at the gas outlet opening (15) of the tube (2).

2. Method according to claim 1, **characterised in that** the laser beam (10) is generated in a solid state laser, especially a Nd-YAG laser, or in a gas laser, especially a CO₂ laser or an excimer laser, or in a diode laser.

3. Method according to claims 1 and 2, **characterised in that** the laser beam (10) is guided through the microwave-transparent tube (2) and through the metallic nozzle (1).

4. Method according to claim 3, **characterised in that** the metallic nozzle (1) is an expansion nozzle.

5. Method according to claims 1 and 2, **characterised in that** the laser beam (10) is guided outside the microwave-transparent tube (2).

6. Method according to claim 3 or 5, **characterised in that** the laser beam (10) and the plasma beam (11) are at an angle to one another.

7. Method according to any one of the preceding claims, **characterised in that** microwaves in the frequency range between 0.95 GHz and 35 GHz are used to generate the plasma.

8. Method according to any one of the preceding claims, **characterised in that** the waveguide (3) aligned perpendicular to the microwave-transparent tube (2) has a constricted cross-section at the point at which the tube (2) is guided through the waveguide (3).

9. Method according to any one of the preceding claims, **characterised in that** a tube with dielectric properties comprising Si0₂ or Al₂0₃ in pure form without doping is used as the microwave-transparent tube (2).

10. Method according to any one of the preceding claims, **characterised in that** a spark gap is used to ignite the plasma (12).

## Revendications

1. Procédé de soudage hybride laser-plasma, selon lequel on réunit dans la zone de transformation proche des pièces un rayon laser (10) et un jet de plasma (11) pour le soudage des pièces,
**caractérisé en ce que**
le jet de plasma (11) est un jet librement induit par micro-ondes à l'aide des étapes du procédé suivantes consistant à :
- produire des micro-ondes dans une source de micro-ondes à haute fréquence,
- conduire les micro-ondes dans un guide d'ondes (3),
- introduire un gaz de transformation dans un tube transparent aux micro-ondes (2) qui comprend une ouverture d'entrée de gaz (14) et une ouverture d'échappement de gaz (15), à une pression p≥1 bar, le gaz de transformation étant introduit par l'ouverture d'entrée de gaz (14) dans le tube transparent aux micro-ondes (2) de telle manière qu'il présente une composante tangentielle d'écoulement,
- produire un plasma (12) dans le tube transparent aux micro-ondes (2) par allumage sans électrodes du gaz de transformation, et
- produire un jet de plasma (11) à l'aide de l'introduction du plasma (12) dans la chambre de travail (16) par une buse métallique disposée au niveau de l'ouverture d'échappement de gaz (15) du tube (2) (1).

2. Procédé selon la revendication 1,
**caractérisé en ce que**
le rayon laser (10) est produit dans un laser à corps solide, en particulier un laser Nd-YAG, ou un laser à gaz, en particulier un laser à base de CO₂ ou un laser à excimères ou un laser à diode.

3. Procédé selon les revendications 1 et 2,
**caractérisé en ce que**
le rayon laser (10) est conduit par le tube transparent aux micro-ondes (2) et par la buse métallique (1).

4. Procédé selon la revendication 3,
**caractérisé en ce que**
la buse métallique (1) est une buse à expansion.

5. Procédé selon les revendications 1 et 2,
**caractérisé en ce que**
le rayon laser (10) est conduit à l'extérieur du tube transparent aux micro-ondes (2).

6. Procédé selon la revendication 3 ou 5,
**caractérisé en ce que**
le rayon laser (10) et le jet de plasma (11) font entre eux un angle (α).

7. Procédé selon l'une quelconque des revendications précédentes,
**caractérisé en ce qu'**
on utilise des micro-ondes dans la gamme des fréquences entre 0,95 GHz et 35 GHz pour la production de plasma.

8. Procédé selon l'une quelconque des revendications précédentes,
**caractérisé en ce que**
le guide d'ondes (3) orienté perpendiculairement au tube transparent aux micro-ondes (2) est rétréci en section transversale à l'endroit où tube (2) traverse le guide d'ondes (3).

9. Procédé selon l'une quelconque des revendications précédentes,
**caractérisé en ce que**
le tube transparent aux micro-ondes (2) est un tube ayant des caractéristiques diélectriques et en SiO₂ ou Al₂O₃ sous forme pure, sans dopants.

10. Procédé selon l'une quelconque des revendications précédentes,
**caractérisé en ce qu'**
on utilise une étincelle pour l'allumage du plasma (12).
